# FASCICULE DE BREVET EUROPEEN

(11) **EP 2 951 565 B1**
(45) Date de publication et mention de la délivrance du brevet: **29.03.2017**
(21) Numéro de dépôt: 14708615.1
(22) Date de dépôt: 04.02.2014
(51) Int. Cl.: G01N 23/18, G01M 17/03, G21K 1/02

(54) **DISPOSITIF ET PROCÉDÉ POUR LE CONTRÔLE NON DESTRUCTIF DE PNEUMATIQUES PAR TOMOGRAPHIE**
VORRICHTUNG UND VERFAHREN ZUM ZERSTÖRUNGSFREIEN PRÜFEN VON REIFEN DURCH TOMOGRAFIE
DEVICE AND METHOD FOR THE NON DESTRUCTIVE TESTING OF TYRES BY TOMOGRAPHY

(30) Priorité: 04.02.2013 FR 1350955
(43) Date de publication de la demande: 09.12.2015
(73) Titulaire: CyXplus, 13382 Marseille Cédex 13 (FR)
(72) Inventeur: DECROUX, Agnès, F-38660 Lumbin (FR); FICALORA, Fabrice, F-13013 Marseille (FR); ROUBAUD, Olivier, F-13530 Trets (FR); FRANCOIS, Olivier, F-38190 Villard-Bonnot (FR)
(74) Mandataire: Gendron, Vincent Christian
(86) Numéro de dépôt international: PCT/FR2014/050198
(87) Numéro de publication internationale: WO 2014/118482

(56) Documents cités:
- EP-A1- 0 471 096
- JP-A- H02 195 237

## Description

La présente invention concerne un procédé de contrôle tomographique par exploration aux rayons X d'un pneumatique, en vue d'un contrôle non destructif de sa structure interne. Elle concerne également un dispositif pour la mise en oeuvre de ce procédé. Plus particulièrement, le procédé et le dispositif conformes à l'invention sont destinés à permettre la représentation d'images tomographiques de tranches de pneumatiques.

De manière connue en soi, l'obtention d'une image tomographique d'une coupe d'un objet à l'aide d'un appareil de tomographie constitué d'un ensemble source-détecteur, consiste à émettre en direction de cet objet un faisceau de rayons X incidents, tandis que le détecteur permet de mesurer l'absorption des rayons X traversant l'objet, cette absorption étant liée à la densité des matériaux constituant l'objet étudié. Une multiplicité de balayages dans des directions connues et maîtrisées permet de connaître, après un traitement numérique approprié des signaux recueillis sur les cellules de détection du détecteur, la valeur de l'absorption des rayons X en chaque point du plan de coupe considéré, et ainsi de connaître la densité des matériaux constituant l'objet. La connaissance des différentes valeurs de cette densité permet de reconstituer l'image de la coupe de l'objet.

On connaît un dispositif de contrôle de pneumatiques par tomographie par rayons X, développé par la société Yxlon et commercialisé sous lé référence « Y.CT Tire ». Ce dispositif comprend un tube à rayons X et un détecteur linéaire disposés de part et d'autre des flancs d'un pneumatique, amené en position verticale entre la source et le détecteur, de manière à obtenir des vues en trois dimensions en coupe radiale de l'enveloppe du pneumatique, par rotation du pneumatique autour d'un axe vertical. Cependant, ce dispositif est agencé pour permettre de contrôler des pneumatiques qui sont montés sur jante et gonflés, et qui doivent être entièrement positionnés entre la source et le détecteur. Ce dispositif est utilisé à des fins de recherche et développement pour analyser le comportement d'un pneumatique sous charge. Cependant, il n'est pas adapté à un contrôle systématique en fabrication. En effet, outre que le temps d'acquisition des radiographies est très long, l'émission de rayons X doit être réalisée à forte énergie pour pouvoir traverser le métal, au détriment de l'information concernant la gomme qui compose le pneumatique. En conséquence, l'énergie de rayonnement utilisée est trop élevée pour permettre de visualiser correctement d'une part, la gomme constituant l'enveloppe du pneumatique et, d'autre part, le positionnement des nappes métalliques dans la gomme. Dit autrement, seules les nappes métalliques constituant l'enveloppe du pneumatique sont visibles sur les images réalisées.

Par ailleurs, le document EP0471096A1 fait connaître un dispositif de contrôle de pneumatique par tomographie X dans lequel seule la moitié du pneumatique est agencée entre la source et le détecteur, le détecteur pénétrant à l'intérieur du pneumatique au cours du cycle de contrôle. Cette solution présente l'avantage de nécessiter des rayons X de moindre énergie, ce qui améliore la qualité des images obtenues, et notamment le contraste entre les composants métalliques et polymériques. Cependant, ce dispositif présente plusieurs inconvénients. Tout d'abord, le contrôle d'un pneumatique est lent car il nécessite de nombreux cycles de déplacements relatifs entre d'une part l'ensemble source-détecteur et d'autre part le pneumatique, ces déplacements relatifs comportant séquentiellement des allers-retours selon un axe rectiligne transverse et des incréments angulaires selon un mouvement de rotation. De plus, lorsque ce dispositif est utilisé pour contrôler des pneumatiques de tailles sensiblement différentes, ces cycles de déplacements relatifs doivent être modifiés, ce qui complique et rallonge le paramétrage et le réglage du dispositif lors d'un changement de taille de pneumatique.

Dans ce contexte, la présente invention a pour but de proposer un dispositif et un procédé de contrôle de pneumatique par tomographie, exempts de l'une au moins des limitations précédemment évoquées et, en particulier, qui permettent, avec un temps de cycle réduit, la reconstruction d'images de tomographie présentant un contraste amélioré entre les nappes métalliques et les couches polymériques constituant l'enveloppe du pneumatique et qui permettent en outre de couvrir une large gamme de tailles de pneumatiques en simplifiant les réglages lors des changements de taille.

Dans le but de résoudre ce problème, la présente invention propose un dispositif de contrôle d'un pneumatique, destiné à permettre la représentation d'images tomographiques de sections d'une enveloppe dudit pneumatique, comprenant une source de rayonnement ionisant agencée à l'extérieur dudit pneumatique apte à émettre le rayonnement sous la forme d'un faisceau divergent et un détecteur apte à recevoir ledit rayonnement après traversée d'au moins une partie dudit pneumatique, ledit détecteur étant disposé en regard de ladite source à une distance prédéterminée L2 de ladite source et étant situé à l'opposé de ladite source par rapport à au moins une section enveloppe dudit pneumatique, ledit pneumatique étant maintenu entre ladite source et ledit détecteur avec l'axe dudit pneumatique s'étendant parallèlement à un plan de coupe passant par le foyer de ladite source et ledit détecteur, tandis que ledit pneumatique et l'ensemble source-détecteur sont aptes à être animés d'un mouvement de rotation relatif l'un par rapport à l'autre autour d'un axe de rotation perpendiculaire audit plan de coupe et dont l'intersection avec ledit plan de coupe passe par un centre de rotation situé entre ladite source et ledit détecteur à une distance prédéterminée L1 de ladite source, ledit dispositif étant agencé de sorte que pendant un cycle de contrôle, ledit détecteur est agencé au moins en partie dans une zone interne centrale dudit pneumatique. Selon l'invention, l'intersection dudit faisceau divergent avec ledit plan de coupe présente une ouverture angulaire comprise entre 13° et 30°, tandis que ledit centre de rotation est positionné de façon fixe entre ladite source et ledit détecteur de sorte que le ratio L1/L2 est compris entre 0,75 et 0,9, par quoi ledit dispositif est apte à contrôler des pneumatiques de dimensions différentes en maintenant constantes les positions relatives de ladite source, dudit détecteur et dudit centre de rotation.

Grâce à cet agencement, étant donné que le détecteur passe à l'intérieur de la zone interne centrale du pneumatique pendant un cycle de contrôle, le pneumatique se retrouve seulement partiellement positionné entre la source et le détecteur. En l'occurrence, à chaque tir effectué depuis la source de rayonnement, la section d'enveloppe opposée à celle tomographiée par rapport à l'axe du pneumatique, ne passe jamais dans le champ de rayonnement acquis par le détecteur. La reconstruction de l'image tomographique réalisée n'est donc pas polluée par le passage de la section d'enveloppe opposée à celle tomographiée. En outre, le fait que la tomographie réalisée concerne une seule section d'enveloppe simultanément permet de limiter l'énergie de rayonnement et ainsi d'augmenter le contraste de l'image reconstruite, tout en réduisant avantageusement le coût des moyens de radioprotection associés. Enfin, le mouvement relatif du pneumatique et de l'ensemble source-détecteur autour d'un axe de rotation perpendiculaire audit plan de coupe permet de modifier le positionnement relatif du pneumatique et de l'ensemble source-détecteur sur une plage d'excursion angulaire donnée et partant, de réaliser de multiples balayages de la section d'enveloppe à tomographier en modifiant, à chaque balayage, la position angulaire de la section d'enveloppe relativement audit plan de coupe dans un temps de cycle réduit.

En outre, il a été découvert que la combinaison particulière d'une ouverture angulaire du faisceau comprise entre 13° et 30° avec un centre de rotation positionné de façon fixe entre la source et le détecteur selon le critère L1 / L2 compris entre 0,75 et 0,9, permettait de pouvoir effectuer le contrôle d'une large gamme de pneumatiques de dimensions différentes sans nécessiter de complexes réglages à chaque changement de dimensions. En effet, pour obtenir une reconstruction tomographique précise, l'algorithme de reconstruction doit être étalonné afin notamment de déterminer précisément la position exacte de l'axe de rotation de l'objet contrôlé par rapport à la source et au détecteur. Cet étalonnage est une opération longue qui nécessite le contrôle d'une pièce étalon de géométrie parfaitement connue, ainsi que des calculs complexes pour déduire des signaux enregistrés la position exacte de l'axe de rotation. Or, la présente solution permet de ne pas avoir à modifier la position de l'axe de rotation, y compris pour contrôler des pneumatiques de taille très différente, par exemple des pneumatiques de diamètre extérieur variant quasiment du simple au double, ce qui permet de s'affranchir de cet étalonnage lors d'un changement de taille de pneumatique.

De surcroit, la plage d'ouverture angulaire choisie est compatible avec un algorithme de reconstruction de type Feldkamp, ce type d'algorithme présentant les avantages d'être robuste, rapide et bien adapté aux traitements en temps réel. La vitesse de contrôle est aussi améliorée par rapport à celle des dispositifs de l'art antérieur, notamment par rapport à celle du dispositif divulgué par le document EP0471096A1, du fait que, pendant le contrôle, le seul déplacement relatif entre d'une part l'ensemble source-détecteur et d'autre part le pneumatique est un simple mouvement de rotation.

Selon d'autres caractéristiques avantageuses du dispositif conforme à l'invention, prises isolément ou en combinaison :
- ledit centre de rotation est situé à l'intérieur de ladite section d'enveloppe dudit pneumatique ;
- l'ouverture angulaire du faisceau divergent est avantageusement comprise entre 15° et 25°.
- le ratio L1 / L2 est avantageusement compris entre 0,8 et 0,9.
- la longueur L2 est avantageusement inférieure à 2 mètres, plus avantageusement inférieure à 1,5 mètres, préférentiellement comprise entre 1,1 mètres et 1,4 mètres.
- la source de rayonnement ionisant est une source de rayons X ;
- ladite source de rayonnement ionisant est préférentiellement un tube à rayons X de tension inférieure à 250 kV ; Aussi, le dispositif de l'invention permet d'utiliser une énergie de rayonnement bien moindre que le dispositif de l'art antérieur décrit plus haut. En effet, ce dernier utilise une source de rayonnement nettement plus énergétique, à savoir soit un tube à rayon X de tension de l'ordre de 450 kV, soit même un accélérateur linéaire (LINAC) encore plus énergétique, de façon à pouvoir traverser la totalité du pneumatique monté sur sa jante métallique, avec l'inconvénient de perte d'information sur les matériaux peu denses constituant le pneumatique. Par contraste, un tube à rayon X de tension inférieure à 250 kV émet des photons X peu énergétiques, ce qui permet d'améliorer le contrôle tomographique des composants du pneumatique présentant une faible densité (i.e. polymères, gomme), tout en restant suffisant pour traverser une section d'enveloppe d'un pneumatique de véhicule de tourisme ou de camion. En effet, étant donné que, selon l'invention, le rayonnement ne doit traverser que la moitié du pneumatique (i.e. une seule des deux sections d'enveloppe), il est possible et avantageux de réduire l'énergie des photons X du rayonnement.
- ledit détecteur peut être un détecteur linéaire ou matriciel ;
- le mouvement de rotation relatif entre ledit ensemble source-détecteur et ledit pneumatique est avantageusement un mouvement continu ;
- ledit dispositif comprend préférentiellement des moyens d'entraînement en rotation dudit pneumatique autour dudit axe de rotation sur ladite plage d'excursion angulaire ;
- en variante, ledit dispositif comprend des moyens d'entraînement en rotation de l'ensemble source-détecteur autour dudit axe de rotation sur ladite plage d'excursion angulaire ;
- ledit pneumatique est préférentiellement agencé de sorte que l'axe dudit pneumatique appartient audit plan de coupe passant par le foyer de ladite source et ledit détecteur ; le plan de coupe est alors radial par rapport au pneumatique, ce qui permet d'obtenir une coupe tomographique radiale. Une telle coupe permet de remplacer les examens d'échantillons prélevés radialement, selon la pratique actuellement en vigueur de contrôle destructif.
- ladite plage d'excursion angulaire s'étend préférentiellement sur au moins 180° ;
- ledit dispositif comprend avantageusement des moyens d'entraînement en rotation dudit pneumatique autour de son axe ;
- ladite source est préférentiellement équipée d'un collimateur de sorte que le rayonnement est émis sous la forme d'un faisceau plan compris dans ledit plan de coupe ; Un tel collimateur est un dispositif conçu pour être adapté sur la source de rayonnement, de façon à obtenir un faisceau plan en éventail (« fan beam » selon la terminologie anglo-saxonne). Avantageusement, l'épaisseur du faisceau mesurée au niveau du détecteur est inférieure à 30 mm, préférentiellement inférieure à 20 mm. L'emploi d'un tel collimateur permet avantageusement de réduire les besoins de radio-protection au niveau de l'enceinte de contrôle et procure en outre un meilleur résultat du fait de la réduction du bruit lié à la diffusion des matériaux plastiques. Cette variante quant à l'emploi d'un collimateur est en outre particulièrement avantageuse prise en combinaison avec l'emploi d'un détecteur de type détecteur linéaire positionné également dans ledit plan de coupe.
- ledit pneumatique est préférentiellement maintenu en position verticale et ledit plan de coupe est horizontal ;
- en variante, ledit pneumatique est maintenu en position horizontale et ledit plan de coupe est vertical.

L'invention concerne également un procédé de contrôle d'un pneumatique destiné à permettre la représentation d'images tomographiques de sections d'une enveloppe dudit pneumatique, dans lequel :
- on fournit un pneumatique, une source de rayonnement ionisant destiné à émettre un rayonnement vers ledit pneumatique sous la forme d'un faisceau divergent et un détecteur aligné avec ladite source à une distance prédéterminée L2 de ladite source, de sorte que ladite source et ledit détecteur soient situés de part et d'autre de l'enveloppe dudit pneumatique, l'axe dudit pneumatique s'étendant parallèlement à un plan de coupe passant par le foyer de ladite source et ledit détecteur,
- on génère, pendant un cycle de contrôle, un mouvement de rotation relatif entre ledit pneumatique et l'ensemble source-détecteur autour d'un axe de rotation perpendiculaire audit plan de coupe et dont l'intersection avec ledit plan de coupe passe par un centre de rotation situé entre ladite source et ledit détecteur à une distance prédéterminée L1 de ladite source, tout en faisant passer ledit détecteur, au moins en partie, à l'intérieur d'une zone centrale interne dudit pneumatique pendant ledit mouvement de rotation, et
- on mesure pendant ledit cycle de contrôle à l'aide dudit détecteur, l'absorption dudit rayonnement traversant au moins une section d'enveloppe selon ledit plan de coupe,
ledit procédé étant caractérisé en ce que l'intersection dudit faisceau divergent avec ledit plan de coupe présente une ouverture angulaire comprise entre 13° et 30°, tandis que ledit centre de rotation est positionné de façon fixe entre ladite source et ledit détecteur de sorte que le ratio L1/L2 est compris entre 0,75 et 0,9, par quoi on peut contrôler des pneumatiques de dimensions différentes en maintenant constantes les positions relatives de ladite source, dudit détecteur et dudit centre de rotation.

De préférence, on fait tourner ledit pneumatique autour dudit axe de rotation perpendiculaire audit plan de coupe.

En variante, on fait tourner l'ensemble source-détecteur autour dudit axe de rotation perpendiculaire audit plan de coupe.

Ledit axe de rotation passe préférentiellement par un centre de rotation situé à l'intérieur de ladite section d'enveloppe dudit pneumatique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

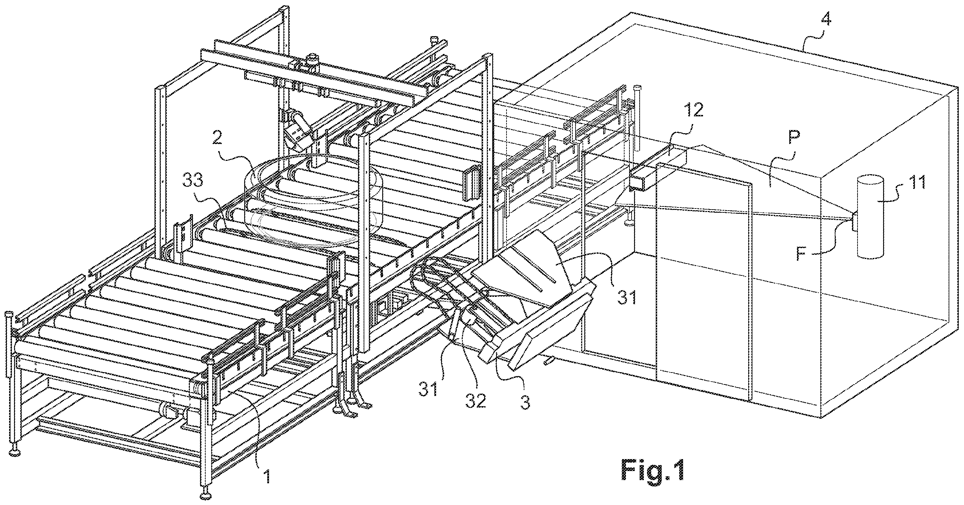

- la Figure 1 est une vue schématique en perspective d'un dispositif conforme à l'invention, avec l'enveloppe du pneumatique en position d'amenée horizontale ;
- la Figure 2 est une vue schématique en perspective d'un dispositif conforme à l'invention avec l'enveloppe du pneumatique en cours de transfert vers une enceinte de contrôle;
- la Figure 3 est une vue schématique en perspective d'un dispositif conforme à un mode de réalisation préféré de l'invention illustrant une position d'entrée, respectivement de sortie, du pneumatique au niveau de l'enceinte de contrôle pour la mise en oeuvre d'un cycle de contrôle ;
- les Figures 4-7 sont des vues schématiques de dessus de l'ensemble source-détecteur et du pneumatique, présentant des exemples de positions relatives de l'ensemble source-détecteur et du pneumatique au cours d'un cycle de contrôle de pneumatique selon un mode de réalisation préféré de l'invention ;

Le dispositif conforme à l'invention pour le contrôle de pneumatiques par tomographie aux rayons X est destiné à être intégré à une ligne de production de pneumatiques. Un convoyeur d'amenée 1 d'un pneumatique 2 coopère avec un chariot de manutention 3 pour le transfert du pneumatique 2 depuis le convoyeur d'amenée 1 vers une enceinte de contrôle 4, présentant des parois imperméables aux rayons X, où sont agencés une source de rayons X 11 et un détecteur 12 de rayons X. Le détecteur 12 peut être un détecteur linéaire ou matriciel et est agencé horizontalement au sein de l'enceinte de contrôle 4 en regard de la source 11. La source 11 est préférentiellement équipée d'un collimateur de sorte que le rayonnement est émis sous la forme d'un faisceau plan d'axe horizontal, définissant un plan de coupe P, dit aussi plan de tir, passant par le foyer F de la source 11 et le détecteur 12, positionné à l'horizontal.

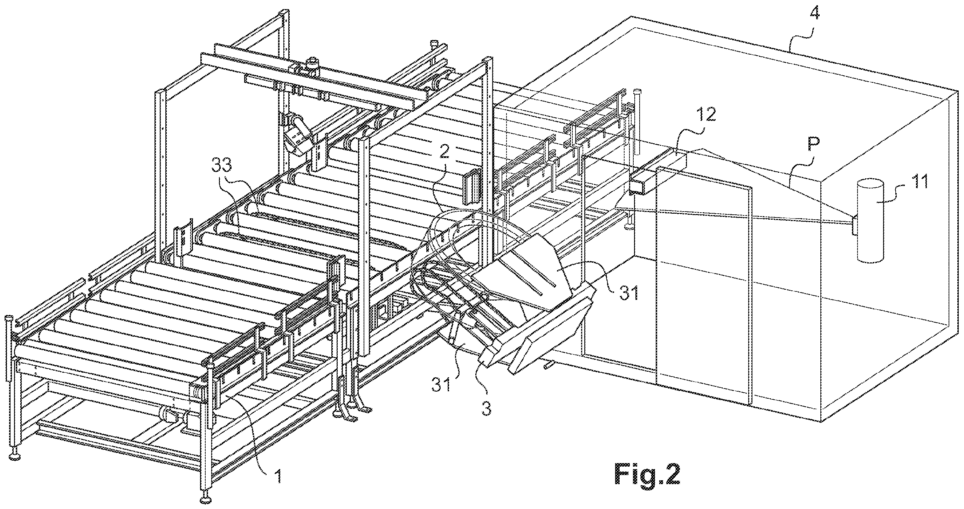

Le chariot de manutention 3 du pneumatique comprend un châssis supportant un système de motorisation permettant au chariot 3 de pouvoir se déplacer sur un rail (non représenté) disposé parallèlement à la direction longitudinale du convoyeur d'amenée 1. En particulier, le chariot de manutention 3 est apte à être déplacé le long du rail d'une zone de chargement du pneumatique 2 depuis le convoyeur d'amenée 1 vers l'intérieur de l'enceinte de contrôle 4. Au niveau de la zone de chargement, le chariot de manutention 3 est disposé latéralement au convoyeur d'amenée 1, en regard de moyens d'entraînement 33 intégrés au convoyeur d'amenée 1 et aptes à entraîner le pneumatique 2, en position horizontale sur le convoyeur d'amenée, dans une direction perpendiculaire à la direction longitudinale du convoyeur d'amenée 1. De la sorte, le pneumatique 2, transporté en position horizontale sur le convoyeur d'amenée 1, est chargé dans cette position dans le chariot de manutention 3 (Figure 2). Le chariot 3 est muni de moyens de basculement du pneumatique aptes à faire passer le pneumatique de la position horizontale de chargement à une position verticale, dans laquelle il sera transféré par le chariot jusque dans l'enceinte de contrôle 4. Ces moyens de basculement sont également conçus pour permettre le basculement du pneumatique de la position verticale à la position horizontale. Après son chargement, le pneumatique 2 est donc positionné verticalement dans le chariot de manutention 3. En outre, le chariot de manutention 3 est pourvu de moyens de maintien du pneumatique, permettant au pneumatique 2 d'être maintenu verticalement au moyen d'une pression exercée à la base du pneumatique positionné verticalement dans le chariot. Ces moyens de maintien comprennent deux mâchoires 31 disposées en regard l'une de l'autre, entre lesquelles le pneumatique 2 est chargée et qui sont aptes à venir s'appliquer contre les flancs respectifs de la partie basse de l'enveloppe du pneumatique en exerçant une pression contre eux dès lors que le pneumatique est en position verticale. En outre, le chariot de manutention 3 est muni de moyens de réglage de la position du pneumatique 2 ainsi maintenu dans le chariot, par exemple mis en oeuvre sous la forme d'un système de galets au contact de la partie basse de la bande de roulement du pneumatique, permettant d'assurer le centrage du pneumatique sur le chariot ainsi que sa hauteur par rapport à la base du chariot. En particulier, ces moyens de réglage de la position du pneumatique permettent de positionner le plan radial horizontal de l'enveloppe du pneumatique 2 à une hauteur telle qu'il coïncide avec le plan de coupe P formé par le foyer F de la source 11 et le détecteur 12, lorsque le pneumatique 2 est transféré dans l'enceinte de contrôle 4. Dit autrement, l'axe X-X du pneumatique 2 doit préférentiellement appartenir au plan de coupe P lors de la mise en oeuvre d'un cycle de contrôle du pneumatique 2. Enfin, le chariot de manutention 3 du pneumatique comprend encore des moyens d'entraînement en rotation du pneumatique autour de son axe X-X, se présentant par exemple sous la forme d'un galet motorisé 32 au contact de la partie basse de la bande de roulement du pneumatique positionné verticalement sur le chariot. Ces moyens permettent avantageusement de faire tourner le pneumatique sur lui-même afin de pouvoir présenter divers angles de section d'enveloppe à tomographier.

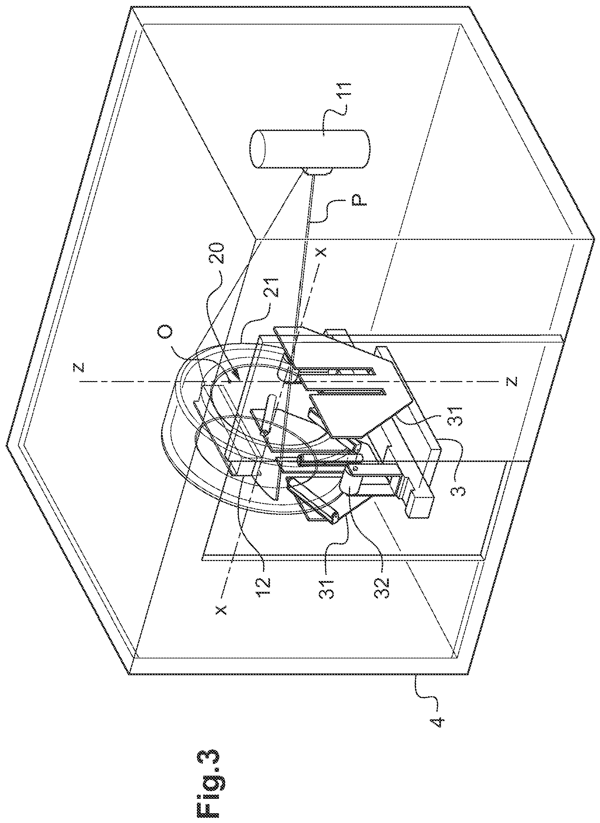

Nous allons maintenant décrire plus en détail, la phase d'acquisition des images par rayons X d'une section d'enveloppe du pneumatique 2, mise en oeuvre lors d'un cycle de contrôle du pneumatique 2. La phase d'acquisition des images par rayons X est donc réalisée dans l'enceinte de contrôle 4, avec le pneumatique 2 maintenu préférentiellement en position verticale sur le chariot de manutention 3 et positionné en hauteur de sorte que son axe X-X soit situé dans le plan de coupe P horizontal passant par le foyer F de la source 11 et le détecteur 12. A noter que le pneumatique 2 ainsi maintenu et positionné n'est pas monté sur jante pour la mise en oeuvre du cycle de contrôle. La figure 3 illustre la position d'entrée du pneumatique 2 dans l'enceinte de contrôle 4, dans laquelle l'enveloppe du pneumatique 2 est amenée à proximité immédiate du détecteur 12 dans l'enceinte de contrôle 4 et est positionnée relativement à l'ensemble source-détecteur, de telle sorte que l'axe X-X du pneumatique est sensiblement perpendiculaire à l'axe longitudinal du détecteur 12, c'est-à-dire de telle sorte que le flanc du pneumatique 2 soit sensiblement parallèle au détecteur 12. Dans cette position, le détecteur 12 est situé à l'opposé de la source 11 par rapport à la section d'enveloppe 21 à tomographier.

Conformément à l'invention, pendant la phase d'acquisition des images, le détecteur 12 positionné à l'horizontal est prévu pour passer à l'intérieur de la zone interne centrale 20 du pneumatique 2, tandis que le pneumatique 2 et l'ensemble source 11-détecteur 12 sont prévus pour être animés d'un mouvement de rotation relatif l'un par rapport à l'autre autour d'un axe de rotation Z-Z perpendiculaire au plan de coupe P, de manière à pouvoir modifier la position angulaire de l'enveloppe du pneumatique 2 relativement au plan de coupe horizontal P, sur une plage d'excursion angulaire prédéterminée, avantageusement comprise entre 180° et 360° et préférentiellement égale à 180°. Ainsi, étant donné que le détecteur passe par l'intérieur de la zone interne centrale 20 du pneumatique, à chaque mesure acquise par l'ensemble source-détecteur, le faisceau intercepté par le détecteur 12 traverse une seule section d'enveloppe, qui est celle à tomographier, et la section d'enveloppe opposée à celle tomographiée (par rapport à l'axe du pneumatique) ne passe jamais dans le champ du faisceau de rayonnement acquis par le détecteur 12. En outre, le faisceau intercepté par le détecteur après traversée de la section d'enveloppe à tomographier est suffisamment large pour couvrir la totalité de la section d'enveloppe. par ailleurs, le fait de n'irradier qu'une seule section d'enveloppe permet de conserver une distance proche et relativement constante entre la section d'enveloppe, le détecteur et la source, ce qui a pour effet de limiter les variations de grandissement dans l'image acquise. Egalement, le fait de n'irradier qu'une seule section d'enveloppe nécessite une énergie moindre, ce qui permet d'augmenter le contraste de l'image reconstruite et ainsi de pouvoir visualiser à la fois la gomme et le positionnement des nappes métalliques dans la gomme.

Selon un mode de réalisation préféré, l'ensemble source-détecteur est prévu pour rester fixe, tandis que le pneumatique positionné préférentiellement verticalement est entraîné en rotation autour de l'axe de rotation vertical Z-Z, par l'intermédiaire de moyens d'entraînement en rotation. Pour ce faire, le chariot de manutention coopère avec un mécanisme de pivot permettant de faire tourner l'enveloppe du pneumatique 2 positionnée verticalement autour de l'axe de rotation vertical Z-Z. Par exemple, le mécanisme de pivot assurant la rotation de l'enveloppe du pneumatique autour de l'axe de rotation vertical Z-Z est constitué par un plateau tournant horizontal (non représenté) coopérant avec la base du chariot de manutention et le pneumatique 2 est positionné sur le plateau tournant par l'intermédiaire du chariot de manutention, de manière que l'axe vertical de rotation du plateau tournant horizontal coïncide avec l'axe de rotation Z-Z autour duquel on souhaite faire tourner l'enveloppe du pneumatique 2. Le maintien du pneumatique 2 en position verticale sur le chariot de manutention 3 par l'intermédiaire des mâchoires 31, permet avantageusement d'éviter que le pneumatique bouge lors de la rotation du plateau tournant, ce qui aurait pour effet de générer un flou important sur les images tomographiques reconstruites. Par ailleurs, le mouvement de rotation du pneumatique autour de l'axe de rotation vertical Z-Z est préférentiellement un mouvement continu au cours du cycle de contrôle, de manière à diminuer la durée du cycle.

Avantageusement, l'axe vertical de rotation Z-Z est prévu pour passer par un point fixe O situé à l'intérieur de la section d'enveloppe 21 du pneumatique à tomographier. Il n'est toutefois pas impératif d'avoir un centre de rotation fixe par rapport au pneumatique. Dit autrement, le pneumatique peut bouger dans le référentiel en rotation à condition de connaître avec précision, à chaque balayage, la position du pneumatique par rapport au centre de rotation. Le traitement de reconstruction d'image est cependant rendu plus complexe. Egalement, il n'est pas non plus impératif que le centre de rotation soit situé à l'intérieur de la section de l'enveloppe à tomographier, bien que cette configuration facilite l'opération de faire tourner le pneumatique sur une plage d'excursion angulaire autour de l'axe vertical, typiquement de 180°, en faisant passer le détecteur 12 à l'intérieur de la zone centrale interne 20 du pneumatique, en particulier pour un détecteur présentant une grande longueur.

Dans une variante de réalisation, le mouvement relatif de rotation entre le pneumatique et l'ensemble source-détecteur est obtenu en gardant le pneumatique fixe, tandis que l'ensemble source-détecteur est conçu pour tourner autour de l'axe de rotation vertical Z-Z. Toutefois, cette variante est plus complexe à mettre en oeuvre mécaniquement en regard de celle où c'est le pneumatique qui est entraîné en rotation autour de l'axe Z-Z et non l'ensemble source-détecteur.

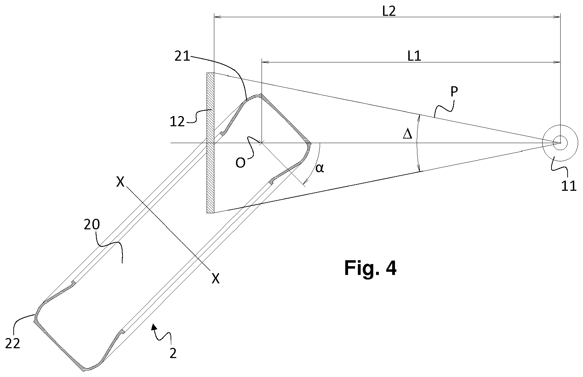

Les figures 4 à 7 montrent des exemples de positions relatives du pneumatique et de l'ensemble source-détecteur au cours d'un cycle de contrôle de pneumatique, obtenues en faisant tourner le pneumatique autour de l'axe de rotation vertical passant par le centre de rotation O situé à l'intérieur de la section d'enveloppe 21 à tomographier. Ainsi, la figure 4 montre une position initiale, où, du fait de la rotation du pneumatique 2, le détecteur 12 vient à l'intérieur du pneumatique 2 par sa zone interne centrale 20, avec un angle α considéré entre l'axe X-X du pneumatique 2 et une ligne normale au détecteur 12 passant par le foyer F de la source, choisi avantageusement entre -45° et +45° et préférentiellement sensiblement égal à 45°. Dans cette position, le détecteur 12 est situé à l'opposé de la source 11 par rapport à la section d'enveloppe 21 à tomographier considérée dans le plan de coupe horizontal P et la section d'enveloppe 22 opposée à celle tomographiée 21 ne passe pas dans le champ du faisceau de rayonnement acquis par le détecteur 12.

La source 11 est équipée d'un collimateur de sorte que le rayonnement est émis sous la forme d'un faisceau plan confondu avec le plan de coupe P. Ce collimateur est un dispositif conçu pour être adapté sur la source de rayonnement, de façon à obtenir un faisceau en éventail (« fan beam » selon la terminologie anglo-saxonne). Ce faisceau est avantageusement quasiment plat et se présente sous la forme d'un éventail plan compris dans le plan de coupe P. L'intersection de ce faisceau avec le plan de coupe P présente l'aspect d'un secteur angulaire dont le sommet est confondu avec la source 11, et dont l'angle au sommet Δ, appelé l'ouverture angulaire du faisceau en éventail, est avantageusement compris entre 13° et 30°, préférentiellement compris entre 15° et 25°.

L'épaisseur du faisceau mesurée au niveau du détecteur 12 est inférieure à 30 mm, avantageusement inférieure à 20 mm.

Le centre de rotation O est situé à l'intersection du plan de coupe horizontal P et de l'axe de rotation vertical Z-Z. Le centre de rotation O est situé à une position fixe entre la source 11 et le détecteur 12, à une distance L1 de la source 11. Le détecteur 12 est situé à une distance L2 de la source 11. Le ratio L1/L2 est avantageusement compris entre 0,75 et 0,9, préférentiellement entre 0,8 et 0,9.

La longueur L2 est avantageusement inférieure à 2 mètres, plus avantageusement inférieure à 1,5 mètres, préférentiellement comprise entre 1,1 mètres et 1,4 mètres.

Cette configuration permet de contrôler une large gamme de pneumatiques dont la taille varie quasiment du simple au double, en gardant identiques les positions relatives de la source 11, du détecteur 12 et du centre de rotation O. Ainsi, ce dispositif permet de contrôler des petits pneumatiques de véhicule de tourisme, par exemple des pneumatiques de largeur 155mm, de diamètre intérieur 380mm et de diamètre extérieur 520mm. De plus, il permet aussi de contrôler des pneumatiques nettement plus gros, par exemple des pneumatiques de véhicule tout terrain de largeur 355mm, de diamètre intérieur 585mm et de diamètre extérieur 900mm.

La combinaison d'une ouverture angulaire Δ comprise entre 15° et 25° avec un ratio L1/L2 compris entre 0,8 et 0,9 est particulièrement avantageuse, car elle conduit à un dispositif de contrôle robuste, sensible, rapide et compact.

De plus, du fait de la position fixe du centre de rotation O, il n'est pas nécessaire de procéder à un étalonnage complexe du dispositif lors des changements de taille de pneumatique.

Des préjugés ont dû être vaincus pour imaginer de pouvoir contrôler avec un centre de rotation O fixe une large gamme de pneumatiques. En effet, les dispositifs de l'art antérieur, et notamment celui divulgué par EP0471096A1 font varier la position du centre de rotation en fonction de la taille des pneumatiques à contrôler, notamment pour éviter que le pneumatique entraîné en rotation ne vienne percuter le détecteur, ce dernier devant passer à l'intérieur du pneumatique au cours du cycle de contrôle. Or, contre toute attente, il est possible de conserver un centre de rotation O fixe pour couvrir une large gamme de pneumatique, sous réserve que l'ouverture angulaire du faisceau Δ soit compris entre 13° et 30° et que le ratio L1/L2 soit compris entre 0,75 et 0,9.

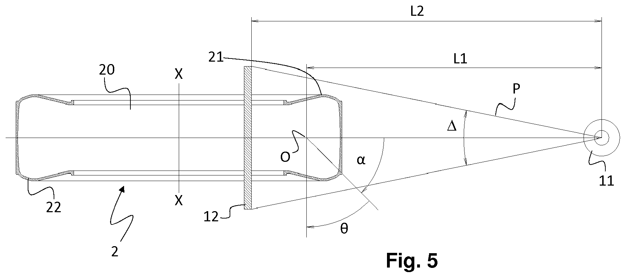

La figure 5 illustre une première position intermédiaire obtenue par rotation du pneumatique 2 d'un angle θ autour de la section d'enveloppe 21 et, plus précisément par rotation du pneumatique 2 autour de l'axe de rotation vertical passant par le centre de rotation O situé selon cet exemple à l'intérieur de la section d'enveloppe 21 à tomographier. Conformément à l'invention, on fait tourner le pneumatique 2 d'un angle θ autour de l'axe de rotation vertical passant par le centre de rotation O, en faisant passer le détecteur 12 à l'intérieur du pneumatique 2 par la zone interne centrale 20 du pneumatique, le faisceau étant intercepté par le détecteur 12 après traversée de la totalité de la section d'enveloppe 21.

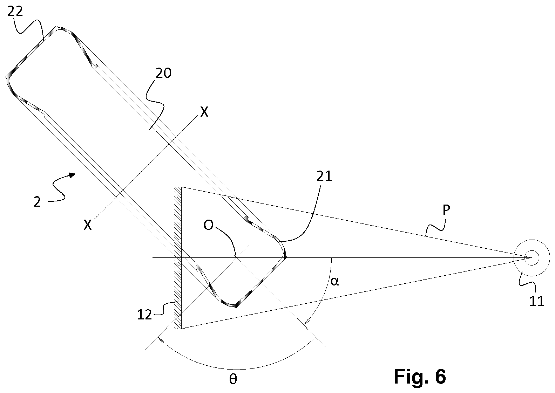

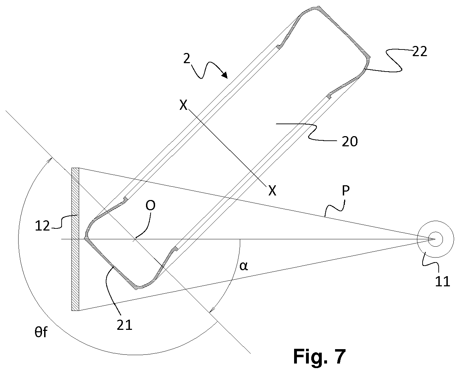

La figure 6 illustre une position intermédiaire suivante obtenue en poursuivant la rotation continue du pneumatique 2 autour de l'axe de rotation vertical passant par le centre de rotation O situé à l'intérieur de la section d'enveloppe 21 à tomographier, en faisant toujours passer le détecteur 12 à l'intérieur du pneumatique 2 par la zone interne centrale 20. Pendant la phase d'acquisition d'images, la rotation du pneumatique 2 en position verticale autour de la section d'enveloppe 21 tomographiée dans le plan de coupe P est effectuée préférentiellement avec une excursion angulaire totale θf comprise entre 180° et 200°. La figure 7 illustre la position finale ainsi obtenue avec une telle excursion angulaire pour le mouvement de rotation du pneumatique 2 autour de la section d'enveloppe 21 à tomographier.

On privilégiera l'utilisation d'un détecteur linéaire par rapport à un détecteur matriciel. En effet, un détecteur linéaire est plus compact et peut donc plus facilement passer à l'intérieur de la zone interne centrale 20 du pneumatique, notamment lorsque le pneumatique est de petite taille. De plus, un détecteur linéaire est plus simple et moins coûteux à mettre en oeuvre qu'un détecteur matriciel. Enfin, le temps d'acquisition d'un détecteur linéaire est avantageusement plus court comparativement à un détecteur matriciel. A titre d'exemple, pour le contrôle d'un pneumatique de véhicule de tourisme, on pourra notamment utiliser un détecteur linéaire de largeur 512mm, comportant par exemple 2560 pixels de largeur 0,2mm. Pour le contrôle d'un pneumatique de taille plus importante, par exemple un pneumatique de camion, on pourra notamment utiliser un détecteur linéaire de largeur 1024mm, comportant par exemple 2560 pixels de largeur 0,4mm ou encore 5120 pixels de largeur 0,2 mm.

Le détecteur linéaire doit présenter une largeur suffisante pour intercepter la totalité du faisceau en éventail. Ainsi, par exemple, dans le cas où le faisceau présente ouverture angulaire Δ égale à 20°, et dans le cas où la distance L2 séparant la source du détecteur est égale à 1,3 mètre, la largeur du détecteur doit être au moins égale à 2 x L2 x tg (Δ / 2) = 459mm. En pratique, on choisit un détecteur de largeur légèrement supérieure à ce minimum, par exemple de largeur 512mm dans cet exemple.

On a vu que le chariot de manutention permet également de modifier l'azimut de l'enveloppe à tomographier sans modifier la position du pneumatique au sein même de l'enceinte, grâce aux moyens 32 d'entraînement en rotation du pneumatique autour de son axe. Ainsi, il est possible de réaliser un contrôle par tomographie de multiples sections d'enveloppes dans un temps de cycle réduit. On peut par exemple réaliser la tomographie d'une première section d'enveloppe sur une course angulaire aller correspondant à la rotation du plateau tournant dans un premier sens et, au terme de cette première course angulaire, après rotation du pneumatique autour de son axe, de réaliser la tomographie d'une seconde section d'enveloppe sur la course angulaire retour correspondant à la rotation du plateau tournant dans le sens inverse au premier sens.

Le dispositif de contrôle est ainsi apte à acquérir des mesures d'absorption pour une section d'enveloppe donnée suivant plusieurs directions considérées dans le plan de coupe horizontal P. Pour ce faire, on introduit un mouvement relatif entre le pneumatique et l'ensemble source-détecteur par rapport à un axe de rotation perpendiculaire au plan de coupe horizontal, de sorte que pendant la phase d'acquisition d'image, l'ensemble source-détecteur et le pneumatique effectuent une rotation l'un par rapport à l'autre autour de cet axe de rotation en parcourant une trajectoire présentant une excursion angulaire prédéterminée, avantageusement comprise entre 180° et 360°et préférentiellement égale à 180°. Lors de la rotation, on peut ainsi acquérir dans le plan de coupe, différentes séries de mesures de l'absorption du rayonnement par la section d'enveloppe du pneumatique. Ces mesures sont mises en mémoire et utilisées pour reconstruire, grâce à un algorithme de calcul adapté, une image tomographique de la section d'enveloppe du pneumatique, qui constitue une coupe transversale de l'enveloppe du pneumatique dans le plan P.

La description qui précède a été faite en relation avec un exemple de réalisation où le pneumatique est maintenu verticalement relativement au plan de coupe qui est quant à lui horizontal. On pourrait tout aussi bien prévoir de maintenir le pneumatique à l'horizontal (i.e. avec son axe disposé verticalement) pendant le cycle de contrôle sans pour autant sortir du cadre de la présente invention, le plan de coupe étant alors positionné verticalement. Dans ce cas, le pneumatique est préférentiellement immobile pendant le cycle de contrôle et l'ensemble source-détecteur est entraîné en rotation selon un axe de rotation perpendiculaire au plan de coupe, soit selon un axe de rotation horizontal.

De manière générale, dans les cas où le pneumatique est immobile pendant la mise en oeuvre d'un cycle de contrôle, l'invention peut être mise en oeuvre quelle que soit la position du pneumatique. De même, dans le cas où l'ensemble source-détecteur est immobile pendant le cycle de contrôle, l'invention peut être mise en oeuvre quelle que soit la position de cet ensemble.

Par ailleurs, l'agencement de l'invention, consistant à faire passer le détecteur à l'intérieur de la zone interne centrale du pneumatique pendant le cycle de contrôle, de façon à avoir toujours une seule section d'enveloppe entre la source et le détecteur traversée par le rayonnement intercepté par le détecteur et pour pouvoir ainsi tomographier une unique section d'enveloppe de pneumatique simultanément, est particulièrement avantageux en regard d'une variante possible, qui consisterait à faire passer la source de rayonnement à l'intérieur du pneumatique, le détecteur étant quant à lui positionné à l'extérieur du pneumatique. En effet, outre des contraintes d'encombrement, l'agencement de l'invention avec le détecteur passant par la zone centrale interne du pneumatique pendant le cycle de contrôle, est particulièrement avantageux en ce qu'il permet que le détecteur soit ainsi placé au plus près de la section d'enveloppe tomographiée pendant le cycle de contrôle et partant, permet d'obtenir une bonne qualité d'image. En outre, pour obtenir une bonne qualité d'image, il est non seulement nécessaire que le détecteur soit placé au plus près de l'enveloppe du pneumatique, mais également que la source soit suffisamment éloignée du détecteur, pour limiter le flou et l'ouverture angulaire du faisceau intercepté par le détecteur. En pratique la source et le détecteur doivent être avantageusement distants de plus de 1 mètre et le détecteur doit être avantageusement situé à moins de 100mm de l'enveloppe du pneumatique. Ces conditions sont particulièrement aisées à satisfaire avec l'agencement source-détecteur selon l'invention, tandis qu'elles seraient impossibles à réaliser en faisant passer la source à l'intérieur de la zone interne centrale du pneumatique.

## Revendications

1. Dispositif de contrôle d'un pneumatique (2) destiné à permettre la représentation d'images tomographiques de sections d'une enveloppe dudit pneumatique, comprenant une source (11) de rayonnement ionisant agencée à l'extérieur dudit pneumatique (2) apte à émettre le rayonnement sous la forme d'un faisceau divergent et un détecteur (12) apte à recevoir ledit rayonnement après traversée d'au moins une partie dudit pneumatique, ledit détecteur (12) étant disposé en regard de ladite source (11) à une distance prédéterminée L2 de ladite source et étant situé à l'opposé de ladite source (11) par rapport à au moins une section d'enveloppe dudit pneumatique (2), ledit pneumatique étant maintenu entre ladite source (11) et ledit détecteur (12) avec l'axe (X-X) dudit pneumatique s'étendant parallèlement à un plan de coupe (P) passant par le foyer (F) de ladite source (11) et ledit détecteur (12), tandis que ledit pneumatique et l'ensemble source-détecteur sont aptes à être animés d'un mouvement de rotation relatif l'un par rapport à l'autre autour d'un axe de rotation (Z-Z) perpendiculaire audit plan de coupe (P) et dont l'intersection avec ledit plan de coupe passe par un centre de rotation (O) situé entre ladite source et ledit détecteur à une distance prédéterminée L1 de ladite source, ledit dispositif étant agencé de sorte que, pendant un cycle de contrôle, ledit détecteur (12) est disposé au moins en partie dans une zone interne centrale (20) dudit pneumatique (2), **caractérisé en ce que** l'intersection dudit faisceau divergent avec ledit plan de coupe présente une ouverture angulaire (Δ) comprise entre 13° et 30°, tandis que ledit centre de rotation est positionné de façon fixe entre ladite source et ledit détecteur de sorte que le ratio L1/L2 est compris entre 0,75 et 0,9, par quoi ledit dispositif est apte à contrôler des pneumatiques de dimensions différentes en maintenant constantes les positions relatives de ladite source, dudit détecteur et dudit centre de rotation.

2. Dispositif selon la revendication 1, **caractérisé en ce que** ledit centre de rotation (O) est situé à l'intérieur de ladite section d'enveloppe (21) dudit pneumatique.

3. Dispositif selon l'une quelconque des revendications 1 ou 2, **caractérisé en ce que** ladite ouverture angulaire est comprise entre 15° et 25°.

4. Dispositif selon l'une quelconque des revendications précédentes, **caractérisé en ce que** ledit ratio L1/L2 est compris entre 0,8 et 0,9.

5. Dispositif selon l'une quelconque des revendications précédentes, **caractérisé en ce que** ladite distance L2 est inférieure à 2 mètres, de préférence comprise entre 1,1 et 1,4 mètres.

6. Dispositif selon l'une quelconque des revendications précédentes, **caractérisé en ce que** la source (11) de rayonnement ionisant est une source de rayons X.

7. Dispositif selon l'une quelconque des revendications précédentes, **caractérisé en ce que** ladite source (11) de rayonnement est un tube à rayons X de tension inférieure à 250kV.

8. Dispositif selon l'une quelconque des revendications précédentes, **caractérisé en ce que** ledit détecteur (12) est un détecteur linéaire ou matriciel.

9. Dispositif selon l'une quelconque des revendications précédentes, **caractérisé en ce que** le mouvement de rotation relatif entre ledit ensemble source-détecteur et ledit pneumatique (2) est un mouvement continu.

10. Dispositif selon l'une quelconque des revendications précédentes, **caractérisé en ce qu'**il comprend des moyens d'entraînement en rotation dudit pneumatique (2) ou de l'ensemble source-détecteur autour dudit axe de rotation (Z-Z) sur une plage d'excursion angulaire s'étendant sur au moins 180°.

11. Dispositif selon l'une quelconque des revendications précédentes, **caractérisé en ce que** ledit pneumatique (2) est agencé de sorte que l'axe (X-X) dudit pneumatique appartient audit plan de coupe (P) passant par le foyer de ladite source (11) et ledit détecteur (12).

12. Dispositif selon l'une quelconque des revendications précédentes, **caractérisé en ce que** ladite source (11) est équipée d'un collimateur de sorte que le rayonnement est émis sous la forme d'un faisceau plan compris dans ledit plan de coupe (P).

13. Dispositif selon l'une quelconque des revendications précédentes, caractérisé en ce ledit pneumatique (2) est maintenu en position verticale et en ce que ledit plan de coupe (P) est horizontal.

14. Dispositif selon l'une quelconque des revendications 1 à 12, caractérisé en ce ledit pneumatique (2) est maintenu en position horizontale et en ce que ledit plan de coupe (P) est vertical.

15. Procédé de contrôle d'un pneumatique (2) destiné à permettre la représentation d'images tomographiques de sections d'une enveloppe dudit pneumatique, dans lequel :
- on fournit un pneumatique (2), une source (11) de rayonnement ionisant destiné à émettre un rayonnement vers ledit pneumatique (2) sous la forme d'un faisceau divergent et un détecteur (12) aligné avec ladite source (11) à une distance prédéterminée L2 de ladite source (11), de sorte que ladite source (11) et ledit détecteur (12) soient situés de part et d'autre de l'enveloppe dudit pneumatique (2), l'axe (X-X) dudit pneumatique s'étendant parallèlement à un plan de coupe (P) passant par le foyer (F) de ladite source (11) et ledit détecteur (12),
- on génère, pendant un cycle de contrôle, un mouvement de rotation relatif entre ledit pneumatique (2) et l'ensemble source-détecteur autour d'un axe de rotation (Z-Z) perpendiculaire audit plan de coupe (P) et dont l'intersection avec ledit plan de coupe passe par un centre de rotation (O) situé entre ladite source et ledit détecteur à une distance prédéterminée L1 de ladite source, tout en faisant passer ledit détecteur (12), au moins en partie, à l'intérieur d'une zone centrale interne (20) dudit pneumatique (2) pendant ledit mouvement de rotation, et
- on mesure pendant ledit cycle de contrôle à l'aide dudit détecteur (12), l'absorption dudit rayonnement traversant au moins une section (21) d'enveloppe selon ledit plan de coupe (P), ledit procédé étant **caractérisé en ce que** l'intersection dudit faisceau divergent avec ledit plan de coupe présente une ouverture angulaire (Δ) comprise entre 13° et 30°, tandis que ledit centre de rotation est positionné de façon fixe entre ladite source et ledit détecteur de sorte que le ratio L1/L2 est compris entre 0,75 et 0,9, par quoi on peut contrôler des pneumatiques de dimensions différentes en maintenant constantes les positions relatives de ladite source, dudit détecteur et dudit centre de rotation.

## Patentansprüche

1. Vorrichtung zum Prüfen eines Reifens (2), die zur Darstellung von tomographischen Bildern von Abschnitten eines Mantels des Reifens bestimmt ist, umfassend eine Quelle (11) ionisierender Strahlung, die außerhalb des Reifens (2) vorgesehen ist und dazu eingerichtet ist, die Strahlung in Form eines divergenten Strahls zu emittieren, und einen Detektor (12), der dazu eingerichtet ist, die Strahlung nach Durchqueren mindestens eines Teils des Reifens zu empfangen, wobei der Detektor (12) der Quelle (11) gegenüber in einem vorbestimmten Abstand L2 von der Quelle angeordnet ist und sich relativ zu mindestens einem Mantelabschnitt des Reifens (2) zu der Quelle (11) entgegengesetzt befindet, wobei der Reifen zwischen der Quelle (11) und dem Detektor (12) gehalten wird, wobei sich die Achse (X-X) des Reifens parallel zu einer Schnittebene (P), die durch den Brennpunkt (F) der Quelle (11) und den Detektor (12) verläuft, erstreckt, während der Reifen und die Quelle-Detektor-Anordnung dazu eingerichtet sind, relativ zueinander in eine Rotationsbewegung um eine Rotationsachse (Z-Z) versetzt zu werden, die senkrecht zu der Schnittebene (P) ist und deren Schnitt mit der Schnittebene durch einen Rotationsmittelpunkt (O) verläuft, der sich zwischen der Quelle und dem Detektor in einem vorbestimmten Abstand L1 von der Quelle befindet, wobei die Vorrichtung so vorgesehen ist, dass, während eines Prüfzyklus, der Detektor (12) mindestens zum Teil in einer inneren mittleren Zone (20) des Reifens (2) angeordnet ist, **dadurch gekennzeichnet, dass** der Schnitt des divergenten Strahls mit der Schnittebene eine Winkelöffnung (Δ) aufweist, die zwischen 13° und 30° beträgt, während der Rotationsmittelpunkt zwischen der Quelle und dem Detektor so festgelegt angeordnet ist, dass das Verhältnis L1/L2 zwischen 0,75 und 0,9 beträgt, wodurch die Vorrichtung zum Prüfen von Reifen unterschiedlicher Maße in der Lage ist, indem die relativen Positionen der Quelle, des Detektors und des Rotationsmittelpunkts konstant gehalten werden.

2. Vorrichtung nach Anspruch 1, **dadurch gekennzeichnet, dass** sich der Rotationsmittelpunkt (O) im Inneren des Mantelabschnitts (21) des Reifens befindet.

3. Vorrichtung nach einem der Ansprüche 1 oder 2, **dadurch gekennzeichnet, dass** die Winkelöffnung zwischen 15° und 25° beträgt.

4. Vorrichtung nach einem der vorhergehenden Ansprüche, **dadurch gekennzeichnet, dass** das Verhältnis L1/L2 zwischen 0,8 und 0,9 beträgt.

5. Vorrichtung nach einem der vorhergehenden Ansprüche, **dadurch gekennzeichnet, dass** der Abstand L2 kleiner als 2 Meter ist, vorzugsweise zwischen 1,1 und 1,4 Meter beträgt.

6. Vorrichtung nach einem der vorhergehenden Ansprüche, **dadurch gekennzeichnet, dass** die Quelle (11) ionisierender Strahlung eine Röntgenstrahlenquelle ist.

7. Vorrichtung nach einem der vorhergehenden Ansprüche, **dadurch gekennzeichnet, dass** die Strahlungsquelle (11) eine Röntgenröhre mit einer Spannung kleiner als 250 kV ist.

8. Vorrichtung nach einem der vorhergehenden Ansprüche, **dadurch gekennzeichnet, dass** der Detektor (12) ein Linear- oder Matrixdetektor ist.

9. Vorrichtung nach einem der vorhergehenden Ansprüche, **dadurch gekennzeichnet, dass** die relative Rotationsbewegung zwischen der Quelle-Detektor-Anordnung und dem Reifen (2) eine kontinuierliche Bewegung ist.

10. Vorrichtung nach einem der vorhergehenden Ansprüche, **dadurch gekennzeichnet, dass** sie Mittel umfasst, um den Reifen (2) oder die Quelle-Detektor-Anordnung zur Drehung um die Rotationsachse (Z-Z) über einen Winkelauslenkungsbereich, der sich über mindestens 180° erstreckt, anzutreiben.

11. Vorrichtung nach einem der vorhergehenden Ansprüche, **dadurch gekennzeichnet, dass** der Reifen (2) so vorgesehen ist, dass die Achse (X-X) des Reifens zu der Schnittebene (P) gehört, die durch den Brennpunkt der Quelle (11) und den Detektor (12) verläuft.

12. Vorrichtung nach einem der vorhergehenden Ansprüche, **dadurch gekennzeichnet, dass** die Quelle (11) mit einem Kollimator versehen ist, so dass die Strahlung in Form eines Flachstrahls emittiert wird, der in der Schnittebene (P) enthalten ist.

13. Vorrichtung nach einem der vorhergehenden Ansprüche, **dadurch gekennzeichnet, dass** der Reifen (2) in vertikaler Position gehalten wird und dass die Schnittebene (P) horizontal ist.

14. Vorrichtung nach einem der Ansprüche 1 bis 12, **dadurch gekennzeichnet, dass** der Reifen (2) in horizontaler Position gehalten wird und dass die Schnittebene (P) vertikal ist.

15. Verfahren zum Prüfen eines Reifens (2), das zur Darstellung von tomographischen Bildern von Abschnitten eines Mantels des Reifens bestimmt ist, wobei
- ein Reifen (2), eine Quelle (11) ionisierender Strahlung zum Emittieren einer Strahlung in Form eines divergenten Strahls zu dem Reifen (2) hin und ein Detektor (12), der mit der Quelle (11) in einem vorbestimmten Abstand L2 von der Quelle (11) ausgerichtet ist, bereitgestellt werden, so dass die Quelle (11) und der Detektor (12) sich zu beiden Seiten des Mantels des Reifens (2) befinden, wobei sich die Achse (X-X) des Reifens parallel zu einer Schnittebene (P), die durch den Brennpunkt (F) der Quelle (11) und den Detektor (12) verläuft, erstreckt,
- während eines Prüfzyklus eine relative Rotationsbewegung zwischen dem Reifen (2) und der Quelle-Detektor-Anordnung um eine Rotationsachse (Z-Z) erzeugt wird, die senkrecht zu der Schnittebene (P) ist und deren Schnitt mit der Schnittebene durch einen Rotationsmittelpunkt (O) verläuft, der sich zwischen der Quelle und dem Detektor in einem vorbestimmten Abstand L1 von der Quelle befindet, und gleichzeitig der Detektor (12) während der Rotationsbewegung mindestens zum Teil in das Innere einer inneren mittleren Zone (20) des Reifens (2) eingebracht wird, und
- während des Prüfzyklus mit Hilfe des Detektors (12) die Absorption der Strahlung, die mindestens einen Abschnitt (21) des Mantels gemäß der Schnittebene (P) durchquert, gemessen wird, wobei das Verfahren **dadurch gekennzeichnet ist, dass** der Schnitt des divergenten Strahls mit der Schnittebene eine Winkelöffnung (Δ) aufweist, die zwischen 13° und 30° beträgt, während der Rotationsmittelpunkt (O) zwischen der Quelle und dem Detektor so festgelegt angeordnet ist, dass das Verhältnis L1/L2 zwischen 0,75 und 0,9 beträgt, wodurch es möglich ist, Reifen unterschiedlicher Maße zu prüfen, indem die relativen Positionen der Quelle, des Detektors und des Rotationsmittelpunkts konstant gehalten werden.

## Claims

1. A device for inspecting a tire (2) intended to allow for the representation of tomographic images of sections of a cover of said tire, comprising a source (11) of ionizing radiation arranged outside of said tire (2) suitable for emitting the radiation in the form of a divergent beam and a detector (12) suitable for receiving said radiation after passing through at least a part of said tire, said detector (12) being arranged facing said source (11) at a predetermined distance L2 from said source and being situated opposite said source (11) relative to at least one section of cover of said tire (2), said tire being held between said source (11) and said detector (12) with the axis (X-X) of said tire extending parallel to a sectional plane (P) passing through the focus (F) of said source (11) and said detector (12), whereas said tire and the source-detector assembly are suitable for being moved by a rotational movement relative to one another about an axis of rotation (Z-Z) at right angles to said sectional plane (P) and whose intersection with said sectional plane passes through a center of rotation (O) situated between said source and said detector at a predetermined distance L1 from said source, said device being arranged such that, during an inspection cycle, said detector (12) is arranged at least partly in a central internal zone (20) of said tire (2), **characterized in that** the intersection of said divergent beam with said sectional plane exhibits an angular aperture (Δ) of between 13° and 30°, whereas said center of rotation is positioned in a fixed manner between said source and said detector such that the ratio L1/L2 is between 0.75 and 0.9, so that said device is suitable for inspecting tires of different dimensions by keeping constant the relative positions of said source, of said detector and of said center of rotation.

2. The device as claimed in claim 1, **characterized in that** said center of rotation (O) is situated inside said section of cover (21) of said tire.

3. The device as claimed in either one of claims 1 or 2, **characterized in that** said angular aperture is between 15° and 25°.

4. The device as claimed in any one of the preceding claims, **characterized in that** said ratio L1/L2 is between 0.8 and 0.9.

5. The device as claimed in any one of the preceding claims, **characterized in that** said distance L2 is less than 2 meters, preferably between 1.1 and 1.4 meters.

6. The device as claimed in any one of the preceding claims, **characterized in that** said source (11) of ionizing radiation is a source of X-rays.

7. The device as claimed in any one of the preceding claims, **characterized in that** said source (11) of radiation is an X-ray tube of a voltage less than 250 kV.

8. The device as claimed in any one of the preceding claims, **characterized in that** said detector (12) is a linear or matrix detector.

9. The device as claimed in any one of the preceding claims, **characterized in that** the relative rotational movement between said source-detector assembly and said tire (2) is a continuous movement.

10. The device as claimed in any one of the preceding claims, **characterized in that** it comprises means for rotationally driving said tire (2) or the source-detector assembly about said axis of rotation (Z-Z) over an angular excursion range extending over at least 180°.

11. The device as claimed in any one of the preceding claims, **characterized in that** said tire (2) is arranged such that the axis (X-X) of said tire belongs to said sectional plane (P) passing through the focus of said source (11) and said detector (12).

12. The device as claimed in any one of the preceding claims, **characterized in that** said source (11) is equipped with a collimator such that the radiation is emitted in the form of a planar beam contained in said sectional plane (P).

13. The device as claimed in any one of the preceding claims, **characterized in that** said tire (2) is held in the vertical position and **in that** said sectional plane (P) is horizontal.

14. The device as claimed in any one of claims 1 to 12, **characterized in that** said tire (2) is held in the horizontal position and **in that** said sectional plane (P) is vertical.

15. A method for inspecting a tire (2) intended to allow for the representation of tomographic images of sections of a cover of said tire, in which:
- a tire (2), a source (11) of ionizing radiation intended to emit a radiation to said tire (2) in the form of a divergent beam and a detector (12) aligned with said source (11) at a predetermined distance L2 from said source (11) are provided, such that said source (11) and said detector (12) are situated on either side of the cover of said tire (2), the axis (X-X) of said tire extending parallel to a sectional plane (P) passing through the focus (F) of said source (11) and said detector (12),
- during an inspection cycle, a relative rotational movement is generated between said tire (2) and the source-detector assembly about an axis of rotation (Z-Z) at right angles to said sectional plane (P) and whose intersection with said sectional plane passes through a center of rotation (O) situated between said source and said detector at a predetermined distance L1 from said source, while passing said detector (12), at least partly, inside a central internal zone (20) of said tire (2) during said rotational movement, and
- during said inspection cycle, said detector (12) is used to measure the absorption of said radiation passing through at least one section (21) of cover along said sectional plane (P), said method being **characterized in that** the intersection of said divergent beam with said sectional plane exhibits an angular aperture (Δ) of between 13° and 30°, whereas said center of rotation is positioned in a fixed manner between said source and said detector such that the ratio L1/L2 is between 0.75 and 0.9, so that it is possible to inspect tires of different dimensions while keeping constant the relative positions of said source, of said detector and of said center of rotation.
